# EUROPÄISCHE PATENTANMELDUNG

(11) **EP 4 793 854 A1**
(43) Veröffentlichungstag der Anmeldung: **19.08.2026**
(21) Anmeldenummer: 26150609.1
(22) Anmeldetag: 07.01.2026
(51) Int. Cl.: G06Q 10/20

(54) **VERFAHREN ZUR BESTIMMUNG EINES OBJEKTSCHADENS UND/ODER ZUR ERMITTLUNG EINES OBJEKTSTATUS**

(30) Priorität: 13.02.2025 DE 102025105325
(71) Anmelder: FORBENCAP GmbH, 87527 Sonthofen (DE)
(72) Erfinder: Conle, Robert Ludwig, 87527 Sonthofen (DE)
(74) Vertreter: advotec.

(57) **Zusammenfassung**

Vorgeschlagen wird ein Verfahren und eine Vorrichtung (102) zur automatischen Bestimmung eines Schadens eines Objektes (100) und/oder zur Ermittlung eines Status des Objektes (100), umfassend die Schritte: Bereitstellen von Bezugs-Videodaten des Objektes (100) als eine Vergleichsbasis für ein maschinelles Lernmodell (108); Erfassen von Echtzeit-Videodaten des Objektes (100) durch eine Kameraeinrichtung (110); Erfassen von Beschleunigungssensordaten und/oder Intertialsensordaten der Kameraeinrichtung (110); Überprüfen von Informationen der Echtzeit-Videodaten unter Verwendung der Beschleunigungssensordaten und/oder den Intertialsensordaten auf Konsistenz; in Abhängigkeit der Konsistenzprüfung, Abgleichen der Echtzeit-Videodaten mit den Bezugs-Videodaten durch das maschinelle Lernmodell (108); und Bestimmen des Schadens des Objektes (100) und/oder Ermitteln des Status des Objektes (100) auf Basis des Abgleichs.

## Beschreibung

Die Erfindung betrifft ein Verfahren zur automatischen Bestimmung eines Schadens eines Objektes und/oder zur Ermittlung eines Status des Objektes. Ferner betrifft die Erfindung eine Vorrichtung zur automatischen Bestimmung eines Schadens eines Objektes und/oder zur Ermittlung eines Status des Objektes. Auch betrifft die Erfindung ein Computerprogrammprodukt sowie einen computerlesbaren Datenträger.

### Stand der Technik

Die Digitalisierung und Automatisierung von Prozessen gewinnt zunehmend an Bedeutung, insbesondere in Bereichen, in denen wiederkehrende administrative Tätigkeiten oder aufwendige manuelle Bewertungen anfallen. Im Kontext von Mietverhältnissen und Wohnraumverwaltung besteht eine wachsende Nachfrage nach effizienten, technologiebasierten Lösungen, die sowohl Mietern als auch Vermietern Transparenz, Zeitersparnis und Rechtssicherheit bieten können.

Dabei stellen insbesondere die Rückforderung von Mietkautionen sowie die Schadensmeldung und deren Bearbeitung komplexe Herausforderungen dar, die in der Regel eine umfassende Dokumentation des Wohnraums, eine präzise Bewertung des Wohnungszustands und eine reibungslose Kommunikation zwischen den beteiligten Parteien erfordern. Herkömmliche Verfahren sind oft mit einem hohen manuellen Aufwand verbunden und bieten Potenzial für Missverständnisse oder Konflikte, etwa bei der Beurteilung von Schäden und/oder der Rückerstattung von Kautionsbeträgen.

Gleichzeitig eröffnen moderne Technologien, wie beispielsweise Augmented Reality (AR), Machine Learning (ML) und bildgebende Verfahren, neue Möglichkeiten, diese Herausforderungen effizienter zu bewältigen.

Es ist eine Aufgabe der Erfindung, ein dahingehend verbessertes Verfahren und/oder eine verbesserte Vorrichtung anzugeben.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 10.

Gemäß einem ersten Aspekt wird ein Verfahren zur automatischen Bestimmung eines Schadens eines Objektes und/oder zur Ermittlung eines Status des Objektes vorgeschlagen. Das Verfahren umfasst die Schritte: Bereitstellen von Bezugs-Videodaten des Objektes als eine Vergleichsbasis für ein maschinelles Lernmodell; Erfassen von Echtzeit-Videodaten des Objektes durch eine Kameraeinrichtung; Erfassen von Beschleunigungssensordaten und/oder Intertialsensordaten der Kameraeinrichtung; Überprüfen von Informationen der Echtzeit-Videodaten unter Verwendung der Beschleunigungssensordaten und/oder Intertialsensordaten auf Konsistenz; in Abhängigkeit der Konsistenzprüfung, Abgleichen der Echtzeit-Videodaten mit den Bezugs-Videodaten durch das maschinelle Lernmodell; und Bestimmen des Schadens des Objektes und/oder Ermitteln des Status des Objektes auf Basis des Abgleichs.

Das "Überprüfen von Informationen der Echtzeit-Videodaten unter Verwendung der Beschleunigungssensordaten und/oder Intertialsensordaten auf Konsistenz" bedeutet vorzugsweise ein Überprüfen von Informationen der Echtzeit-Videodaten mit Sensordaten, die beispielsweise auf den Beschleunigungssensordaten und/oder den Intertialsensordaten basieren. Alternativ oder ergänzend bedeutet das "Überprüfen von Informationen der Echtzeit-Videodaten unter Verwendung der Beschleunigungssensordaten und/oder Inter-tialsensordaten auf Konsistenz" vorzugsweise ein Überprüfen von Informationen der Echtzeit-Videodaten mit Sensordaten, die auf vergangenen bzw. historischen Sensordaten basieren. Alternativ oder ergänzend bedeutet das "Überprüfen von Informationen der Echtzeit-Videodaten unter Verwendung der Beschleunigungssensordaten und/oder Inter-tialsensordaten auf Konsistenz" vorzugsweise ein Überprüfen von Informationen der Echtzeit-Videodaten mit Sensordaten, die akkumulierte Sensordaten aufweisen, die beispielsweise zur Ortsermittlung dienen können.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird eine Vorrichtung zur automatischen Bestimmung eines Schadens eines Objektes und/oder zur Ermittlung eines Status des Objektes vorgeschlagen, wobei die Vorrichtung eine Recheneinrichtung aufweist, die dazu ausgebildet ist, die folgenden Schritte auszuführen: Bereitstellen von Bezugs-Videodaten des Objektes als eine Vergleichsbasis für ein maschinelles Lernmodell; Erfassen von Echtzeit-Videodaten des Objektes durch eine Kameraeinrichtung; Erfassen von Beschleunigungssensordaten und/oder Intertialsensordaten der Kameraeinrichtung; Überprüfen von Informationen der Echtzeit-Videodaten unter Verwendung der Beschleunigungssensordaten und/oder den Intertialsensordaten auf Konsistenz; in Abhängigkeit der Konsistenzprüfung, Abgleichen der Echtzeit-Videodaten mit den Bezugs-Videodaten durch das maschinelle Lernmodell; und Bestimmen des Schadens des Objektes und/oder Ermitteln des Status des Objektes auf Basis des Abgleichs.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Bezugs-Videodaten sind vorzugsweise vorab erfasste Videodaten eines Objekts, die den Zustand des Objekts zu einem definierten Zeitpunkt, wie beispielsweise vor einer Nutzung oder einer Belastung, dokumentieren. Sie dienen vorzugsweise als Vergleichsbasis für ein maschinelles Lernmodell, um Veränderungen und/oder Abweichungen zu identifizieren.

Echtzeit-Videodaten, auch Live-Videodaten genannt, werden vorzugsweise in einer aktuellen Situation durch eine Kameraeinrichtung erfasst und repräsentieren den aktuellen Zustand des Objekts. Diese Daten werden vorzugsweise in Echtzeit mit den Bezugs-Videodaten verglichen, um Veränderungen zu erkennen.

Sensordaten, beispielsweise Beschleunigungssensordaten und/oder Inertialsensordaten (bspw. Gyroskopie) des Videoaufnahmegerätes, werden vorzugsweise durch die Kameraeinrichtung erfasst und liefern Informationen über Bewegungen, Ausrichtungen und/oder Ort der Kamera während der Aufnahme. Diese Daten werden vorzugsweise genutzt, um die Konsistenz der aufgenommenen Videodaten zu überprüfen und sicherzustellen, dass keine Verzerrungen und/oder ungewollten Bewegungen die Qualität der Echtzeit-Videodaten beeinträchtigen, und insbesondere auch, dass nicht absichtlich Teile des Objektes nicht gefilmt, veraltete Daten oder manipulierte Daten bereitgestellt werden. Beispielsweise kann können Perspektivenwechsel im Video mit der entsprechenden Bewegungsschätzung aus den Sensordaten auf Konsistenz verglichen werden. Ferner können auch Positionsdaten, beispielsweise globale Satellitenpositionierung oder vergleichbare Ortsbestimmungsmethoden zur Lokalisierung für eine Konsistenzprüfung herangezogen werden.

Die Kameraeinrichtung umfasst vorzugsweise eine Kamera. Ferner kann die Kameraeinrichtung integrierte Sensoren aufweisen, welche Beschleunigungs- und/oder Inertialdaten aufzeichnen können. Dies ermöglicht es vorzugsweise, eine präzise Zuordnung zwischen den Videodaten und den Sensordaten sicherzustellen.

Das maschinelle Lernmodell, das für den Videovergleich verwendet wird, ist vorzugsweise ein tiefes neuronales Netz, wie ein Convolutional Neural Network (CNN), ein Transformer-Modell oder ein hybrides Modell, das sowohl Bild- als auch Sensordaten integrieren kann. Vorzugsweise werden Modelle wie ein 3D-CNN für die zeitliche und räumliche Analyse der Videodaten verwendet, oder ein multimodales Modell, das die Videodaten mit den Sensordaten kombiniert. Die Konsistenzprüfung erfolgt vorzugsweise durch speziell trainierte Modelle, wie Recurrent Neural Networks (RNNs) einschließlich Long-Shortterm-Memory-Modellen (LSTM), die zeitliche Daten analysieren können, oder ein Variational Autoencoder (VAE), der auch Abweichungen in den Sensordaten erkennen kann.

Die Konsistenzprüfung erfolgt vorzugsweise durch die Analyse der Beschleunigungs-und Inertialsensordaten, die während der Aufnahme der Echtzeit-Videodaten von der Kameraeinrichtung erfasst werden. Vorzugsweise werden diese Sensordaten mit den zeitlichen und/oder räumlichen Eigenschaften der Videodaten abgeglichen, um sicherzustellen, dass die Aufnahmen stabil, vollständig und korrekt ausgerichtet sind. Das maschinelle Lernmodell prüft dabei vorzugsweise, ob die Bewegung der Kamera mit den visuellen Veränderungen im Videomaterial übereinstimmt. Allerdings kann auch ein weiteres Modell für die Konsistenzprüfung verwendet werden. Zum Beispiel wird überprüft, ob die Schwenkbewegung der Kamera mit einer entsprechenden Änderung des Bildinhalts im Video korreliert. Dabei können Anomalien, wie unerwartete Bewegungen, Unschärfen oder fehlende Abschnitte, durch ein Modell, beispielsweise auch durch das maschinelle Lernmodell, erkannt werden, das auf Anomaliedetektion spezialisiert ist, wie etwa ein Variational Autoencoder (VAE) oder ein Recurrent Neural Network (RNN). Vorzugsweise wird eine Konsistenzbewertung auf Basis definierter Schwellenwerte durchgeführt, bei der die Videodaten als konsistent eingestuft werden, wenn die Sensordaten und die Videoinhalte hinreichend übereinstimmen.

Der Vergleich der Videodaten durch das maschinelle Lernmodell erfolgt vorzugsweise durch ein tiefes neuronales Netzwerk, das speziell darauf trainiert ist, Unterschiede zwischen den Bezugs-Videodaten und den Echtzeit-Videodaten zu identifizieren. Vorzugs-weise verwendet das Modell Convolutional Neural Networks (CNNs) oder hybride Netzwerke, um sowohl räumliche als auch zeitliche Merkmale aus den Videodaten zu extrahieren. Die Bezugs-Videodaten dienen dabei als Basislinie, gegen die die neuen Daten geprüft werden. Vorzugsweise wird ein räumlich-zeitlicher Vergleich durchgeführt, bei dem das Modell Bildausschnitte, Texturen, Farben und/oder räumliche Anordnungen im Video analysiert und mit den Bezugsdaten abgleicht. Das Modell nutzt dabei Unterschiede in den Pixelwerten und/oder in den extrahierten Merkmalen, um potenzielle Veränderungen, wie Schäden oder Verschleiß, zu erkennen.

Zusätzlich können multimodale Ansätze verwendet werden, bei denen das Modell die Videodaten mit weiteren Kontextinformationen, wie Metadaten der Aufnahme oder Sensordaten, kombiniert. Vorzugsweise berechnet das Modell dabei Ähnlichkeitswerte und hebt Regionen hervor, die signifikante Abweichungen aufweisen. Durch diesen Abgleich wird nicht nur festgestellt, ob ein Unterschied vorliegt, sondern auch, wo und in welchem Ausmaß dieser Unterschied auftritt. Vorzugsweise wird das Ergebnis des Vergleichs in Form einer detaillierten Analyse präsentiert, die den Zustand des Objekts bewertet und Veränderungen dokumentiert.

Ein konkretes Anwendungsbeispiel des Verfahrens ist die Inspektion von Frachtcontainern nach einer Lieferung. Vor dem Transport wird der Zustand der Waren im Container per Videoaufzeichnung dokumentiert, wobei Bezugs-Videodaten erstellt werden, die den unversehrten Zustand der Fracht zeigen. Nach der Ankunft am Zielort werden Echtzeit-Videodaten der Ware mit einer Kamera, beispielsweise durch ein Smartphone oder eine spezielle Inspektionskamera, aufgenommen. Die Kamera erfasst dabei gleichzeitig Beschleunigungs- und Inertialsensordaten, um sicherzustellen, dass die Videoaufnahmen konsistent und vollständig sind. Das maschinelle Lernmodell vergleicht die Echtzeit-Videodaten mit den Bezugsdaten, um Beschädigungen wie Kratzer, Risse oder Verformungen der Ware zu identifizieren. Werden Abweichungen festgestellt, kann das Modell automatisch einen Schadensbericht erstellen, in dem die Art und der Ort der Schäden beschrieben werden. So wird sichergestellt, dass beschädigte Waren frühzeitig erkannt und entsprechende Maßnahmen, wie Schadensmeldungen oder Versicherungsansprüche, eingeleitet werden.

Die Kameradaten zusammen mit den verwendeten Videodaten können ferner durch einen Hash-Wert, eine Verschlüsselung oder eine Blockchain-Verlinkung mit anderen Daten vor nachträglicher Veränderung oder Manipulation geschützt werden.

Ein weiteres Anwendungsbeispiel ist die Rückgabe eines Mietobjekts, etwa einer Wohnung, nach Beendigung eines Mietverhältnisses. Vor Beginn der Mietzeit wird der Zu-stand der Wohnung durch einen Rundgang mit einer Kamera dokumentiert, wobei Bezugs-Videodaten erstellt werden, die den Zustand aller Räume einschließlich Wänden, Böden und Einrichtungsgegenständen festhalten. Diese Daten dienen als Vergleichsbasis. Bei der Rückgabe der Wohnung nimmt der Mieter erneut ein Video aller Räume auf, entweder mit einem Smartphone oder einer Augmented-Reality-Datenbrille, wobei Echtzeit-Videodaten generiert werden. Die Kamera erfasst vorzugsweise zusätzlich Beschleunigungs- und/oder Inertialsensordaten und/oder Positionsdaten, um sicherzustellen, dass keine Bereiche der Wohnung oder Perspektiven ausgelassen oder unscharf aufgezeichnet werden. Bei Auslassung kann das maschinelle Lernmodell vorzugsweise auf diese Auslassung hinweisen. Das maschinelle Lernmodell vergleicht die Echtzeit-Daten mit den Bezugs-Videodaten und identifiziert Abweichungen wie neue Kratzer, Löcher in den Wänden, Flecken auf dem Boden oder andere Schäden, die über die normale Abnutzung hinausgehen. Basierend auf den Ergebnissen bewertet das Modell, ob die Wohnung in einem ordnungsgemäßen Zustand zurückgegeben wird, und erstellt automatisch einen Bericht. Dieser Bericht kann verwendet werden, um die Kaution teilweise oder vollständig zurückzuerstatten oder Nachbesserungen zu verlangen.

Vorzugsweise schätzt das maschinelle Lernmodell bei Abweichungen oder Mängeln auf der Basis von Vergleichsdaten, die beispielsweise zum Erlernen des Modells verwendet wurden und Bilddaten Kosten aus der Vergangenheit, zuzüglich ggf. dem Alter oder Jahr sowie der Preisniveauentwicklung seitdem oder optional des Ortes für das lokale Preisniveau von Handwerkern oder anderen zur Behebung notwendigen Unternehmungen, auch die Kosten für eine Behebung ein. Beispielsweise kann das Modell ferner selbst aus eigenen Videoaufnahmen mit der Zusatzinformation beispielsweise der tatsächlich entstandenen oder von Dienstleisterna angebotenen Kosten, lernen. Dieses Lernen kann entweder auf eine Instanz des maschinellen Lernmodells beschränkt bleiben, um beispielsweise Datenschutzanforderungen einzuhalten. Andererseits können auch Daten aus vielen Instanzen, beispielsweise in einer Datenbank, bündeln und für das Lernen, also Trainieren heranziehen. Das Lernen dieser Information kann offline durch Trainieren bzw. Fine-Tunen des Modells erfolgen oder online durch Reinforcement.

Ein weiteres Anwendungsbeispiel für das Verfahren ist die Inspektion eines Fahrzeugs. Vorzugsweise werden vor der Nutzung des Fahrzeugs Bezugs-Videodaten aufgenommen, um den unbeschädigten Zustand zu dokumentieren. Nach der Nutzung werden Echtzeit-Videodaten durch die Kamera eines Smartphones oder einer speziellen Inspektionskamera erfasst. Die Beschleunigungs- und Inertialsensordaten der Kamera werden vorzugsweise genutzt, um sicherzustellen, dass die Echtzeit-Aufnahmen stabil und vollständig sind. Das maschinelle Lernmodell vergleicht vorzugsweise die neuen Videodaten mit den Bezugsdaten, um etwaige Kratzer, Beulen oder andere Schäden zu erkennen. Basierend auf diesem Vergleich wird vorzugsweise ein Schadensbericht erstellt, der sowohl die Art des Schadens als auch dessen Lokalisierung umfasst.

Das maschinelle Lernmodell wird vorzugsweise mit großen Mengen an Trainingsdaten trainiert, die sowohl Bezugs-Videodaten als auch zugehörige Echtzeit-Videodaten umfassen. Die Trainingsdaten umfassen vorzugsweise annotierte Beispiele von Schäden und deren genauen Positionen (bspw. durch Bounding-Boxen) sowie Daten, die keinen Schaden zeigen, um das Modell robust zu machen. Darüber hinaus werden vorzugsweise Sensordaten integriert, um die Konsistenzprüfung zu verbessern. Die Daten werden vorzugsweise so aufbereitet, dass verschiedene Lichtverhältnisse, Kamerawinkel und/oder Objektzustände abgedeckt sind, um eine hohe Generalisierungsfähigkeit des Modells sicherzustellen. Auch können Realdaten synthetisch abgewandelt werden, um den Trainingsdatensatz anzureichern.

Durch die Nutzung dieses Verfahrens werden präzisere Ergebnisse erzielt, da die Kombination aus Videodaten und Sensordaten eine höhere Zuverlässigkeit bietet. Vorzugsweise reduziert die Konsistenzprüfung potenzielle Fehler, die durch unvollständige oder verzerrte Daten entstehen könnten. Der automatische Abgleich durch ein maschinelles Lernmodell ermöglicht es vorzugsweise, zeitaufwendige manuelle Vergleiche zu vermeiden. Außerdem wird durch die Integration von Sensordaten vorzugsweise die Erfassung vollständiger und korrekter Daten gewährleistet, was zu einer insgesamt effizienteren und zuverlässigeren Verarbeitung führt.

In einem weiteren Aspekt wird vorgeschlagen, dass die Informationen der Echtzeit-Videodaten optische Flussinformationen aufweisen, und wobei die Konsistenzprüfung ein Abgleichen der optischen Flussinformationen mit den Beschleunigungssensordaten und/oder den Intertialsensordaten in einem Vektorraum aufweist. Der optische Fluss (optical flow) kann beispielsweise die Bewegung von Pixeln oder Bildbereichen über der Zeit, beispielsweise von Frame zu Frame eines Videos darstellen, oft als Vektorfunktion, die jedem Ort im Bild oder Video eine Bewegungsrichtung zuordnet. Dieser optische Fluss kann in der Bildebene liegen und jedem Ort der Bildebene einen 2D-Vektor in der zeitlich späteren Bildebene zuordnen oder das Bild auch in eine räumliche 3D-Umgebung umrechnen, die beispielsweise das ursprünglich aufgenommene Szenario rekonstruieren soll, und für einzelne Pixel, Voxel, Objekte oder Bereiche einen 3D-Vektor in die Rich-tung der zeitlichen Veränderung also beispielsweise zeitlich späteren Lage, erzeugt.

Optische Flussinformationen beschreiben vorzugsweise die Bewegungsvektoren von Bildpunkten zwischen aufeinanderfolgenden Frames eines Videos, die aus Änderungen der Bildinhalte berechnet werden. Sie repräsentieren die Richtung und Geschwindigkeit von Objekten oder Kamerabewegungen innerhalb der aufgenommenen Szene. Vorzugsweise werden diese Informationen durch Algorithmen wie Farneback, Lucas-Kanade und/oder Deep Learning-basierte Modelle zur optischen Flussberechnung extrahiert. Die optischen Flussinformationen bieten eine detaillierte zeitliche Darstellung der Bewegung im Videomaterial und werden genutzt, um die Konsistenz zwischen den aufgenommenen Videodaten und den Sensordaten der Kamera zu überprüfen.

Das Abgleichen in einem Vektorraum erfolgt vorzugsweise durch die mathematische Projektion der optischen Flussinformationen und der Beschleunigungs- oder Inertialsensordaten in denselben Raum. Beide Datentypen werden vorzugsweise in Form von Bewegungsvektoren dargestellt, die Informationen über Richtung und Stärke der Bewegung enthalten. Das Abgleichen geschieht dann durch die Berechnung von Ähnlichkeiten oder Differenzen zwischen den Vektoren, beispielsweise durch Metriken wie den kosinusbasierten Abstand, die euklidische Distanz oder andere vergleichbare Verfahren. Vorzugsweise wird dabei ein maschinelles Lernmodell oder ein speziell trainierter Algorithmus verwendet, um Abweichungen zwischen den optischen Flussinformationen und den Sens-ordaten zu identifizieren. Durch diesen Abgleich wird überprüft, ob die Bewegungen, die in den Videodaten sichtbar sind, mit den Bewegungen der Kamera übereinstimmen, wie sie durch die Sensoren erfasst wurden. Unstimmigkeiten, wie unerwartete Bewegungen oder fehlerhafte Aufnahmen, können so frühzeitig erkannt und die Konsistenz der Daten sichergestellt werden.

In einem weiteren Aspekt wird vorgeschlagen, dass das Objekt eine Wohnung oder ein Wohnhaus aufweist, wobei das Erfassen der Echtzeit-Videodaten des Objektes durch eine Kameraeinrichtung zum Überwachen einer, insbesondere vollständigen, Erfassung des Objektes ein Abgleichen der Echtzeit-Videodaten mit Raumdaten, insbesondere mit Grundrissdaten, der Wohnung oder des Wohnhauses aufweist.

Das Objekt bezieht sich vorzugsweise auf eine Wohnung oder ein Wohnhaus, dessen Zustand überprüft werden soll. Die Echtzeit-Videodaten des Objekts werden vorzugsweise durch eine Kameraeinrichtung erfasst, wobei der Fokus auf einer möglichst vollständigen Dokumentation aller Räume liegt. Die Kameraeinrichtung überwacht während der Aufnahme, ob alle relevanten Bereiche des Objekts abgedeckt sind, indem die erfassten Videodaten vorzugsweise mit vorhandenen Raumdaten abgeglichen werden. Diese Raumdaten können Grundrissinformationen enthalten, die die Struktur, Größe und/oder Aufteilung der Wohnung und/oder des Wohnhauses beschreiben. Diese Raumdaten können auch als Metadaten zu den Bezugs-Videodaten bereitgestellt sein. Durch den Abgleich zwischen den Echtzeit-Videodaten und den Grundrissdaten wird sichergestellt, dass keine Räume oder Bereiche übersehen werden. Das System kann beispielsweise anzeigen, welche Bereiche eines Raums noch nicht erfasst wurden, und den Nutzer entsprechend leiten, um eine lückenlose Dokumentation zu gewährleisten. Dies erhöht die Präzision und Vollständigkeit der Datenerfassung.

In einem weiteren Aspekt wird vorgeschlagen, dass die Kameraeinrichtung ein mobiles Endgerät oder eine Augmented-Reality-Datenbrille aufweist, und wobei die Kameraeinrichtung eine Kamera und einen Beschleunigungssensor und/oder einen Intertialsensor aufweist.

Die Kameraeinrichtung umfasst vorzugsweise ein mobiles Endgerät, wie ein Smartphone oder Tablet, oder eine Augmented-Reality-Datenbrille, die für die Erfassung von Videodaten verwendet wird. Vorzugsweise ist die Kameraeinrichtung mit einer integrierten Kamera ausgestattet, die hochauflösende Videoaufnahmen ermöglicht, und zusätzlich mit einem Beschleunigungssensor und/oder einem Inertialsensor, die Bewegungen und Orientierung der Kamera während der Aufnahme erfassen. Der Beschleunigungssensor misst vorzugsweise lineare Beschleunigungen in verschiedenen Achsen, während der Inertialsensor Rotationen und Lageänderungen der Kamera erkennt. Durch die Kombination dieser Komponenten ermöglicht die Kameraeinrichtung präzise Videoaufnahmen, die durch die Sensordaten ergänzt werden, um die Qualität und Konsistenz der aufgenommenen Daten sicherzustellen. Vorzugsweise erlaubt dies eine nahtlose Integration der visuellen und bewegungsbezogenen Informationen für weiterführende Analysen, wie die Konsistenzprüfung oder die Schadensbewertung.

In einem weiteren Aspekt wird vorgeschlagen, dass das Bestimmen des Schadens des Objektes ein Klassifizieren und/oder Kategorisieren des Schadens des Objektes auf Basis des Vergleichs aufweist, wobei dem maschinellen Lernmodell vorzugsweise schadensspezifische Informationen als zusätzliche Eingangsdaten bereitgestellt werden.

Das Bestimmen des Schadens des Objekts umfasst vorzugsweise ein Klassifizieren und/oder Kategorisieren der erkannten Schäden auf Basis der Ergebnisse des Vergleichs zwischen Bezugs- und Echtzeit-Videodaten. Vorzugsweise wird dabei unterschieden, um welche Art von Schaden es sich handelt, wie beispielsweise Kratzer, Dellen, Risse und/oder Abnutzungserscheinungen, und in welcher Kategorie oder Schwere der Schaden einzuordnen ist. Das maschinelle Lernmodell erhält dafür vorzugsweise schadensspezifische (Meta-) Informationen als zusätzliche Eingangsdaten, die es dem Modell ermöglichen, spezifische Merkmale eines Schadens zu erkennen und korrekt zuzuordnen. Diese Informationen können beispielsweise Bildbeispiele, annotierte Schadenskategorien und/oder Merkmalsbeschreibungen umfassen, die dem Modell bereitgestellt werden. Beispielsweise kann ein Nutzer die (Meta-) Informationen durch Spracheingabe in das mobile Endgerät oder die AR-Datenbrille über ein Mikrofon erzeugen, oder auch über das mobile Endgerät als Textinformationen bereitstellen. Vorzugsweise wird durch diese zusätzliche Datenbasis die Genauigkeit und Zuverlässigkeit bei der Identifikation und Einordnung von Schäden erhöht, sodass präzise und konsistente Ergebnisse erzielt werden können.

Ein Beispiel für die Anwendung wäre, dass der Nutzer über ein mobiles Endgerät zusätzlich eine Texteingabe wie "Nässefleck an Wand" macht, um einen Schaden zu melden. Vorzugsweise wird diese Eingabe als zusätzliche schadensspezifische Information dem maschinellen Lernmodell bereitgestellt. Das Modell nutzt die Texteingabe, um den Kontext des Schadens zu verstehen und die Echtzeit-Videodaten gezielt nach einem entsprechenden Merkmal zu durchsuchen. Der Nutzer nimmt anschließend ein Video der betroffenen Stelle auf, etwa der Wand, auf der sich der gemeldete Nässefleck befindet. Das maschinelle Lernmodell analysiert die Videodaten in Kombination mit den Bezugs-Videodaten und prüft, ob ein Nässefleck vorhanden ist, der in den ursprünglichen Aufnahmen nicht zu sehen war. Dabei können auch weitere Merkmale des Schadens berücksichtigt werden, wie die Größe, Form oder Farbveränderungen, die typisch für einen Feuchtigkeitsfleck sind. Durch die zusätzliche Eingabe "Nässefleck an Wand" kann das Modell seine Analyse fokussieren und die Identifikation und Klassifikation des Schadens beschleunigen. Basierend auf den Ergebnissen kann das Modell dann automatisch eine Kategorisierung vornehmen, etwa "Feuchtigkeitsschaden mittlerer Schwere", und weitere Maßnahmen bzw. Aktionen, wie die Erstellung eines Schadensberichts und/oder die automatische Meldung an eine Versicherung und/oder die Benachrichtigung eines Fachhandwerkers, einleiten.

In einem weiteren Aspekt wird vorgeschlagen, dass das Ermitteln des Status des Objektes ein Erzeugen eines Vergleichsergebnisses aufweist, das angibt, ob das Objekt ein Grenzkriterium erfüllt, oder von diesem abweicht.

Das Ermitteln des Status des Objekts umfasst vorzugsweise die Erstellung eines Vergleichsergebnisses, das angibt, ob das Objekt definierte Grenzkriterien erfüllt oder ob Abweichungen davon festgestellt wurden. Vorzugsweise werden diese Grenzkriterien vorab festgelegt und können spezifische Schwellenwerte oder Anforderungen umfassen, wie beispielsweise zulässige Abnutzung, bestimmte Maße, Farbabweichungen und/oder andere objektbezogene Eigenschaften. Das Vergleichsergebnis wird durch den Abgleich der Echtzeit-Daten mit den Bezugsdaten erzeugt und zeigt vorzugsweise an, ob das Objekt sich innerhalb der akzeptierten Toleranzgrenzen befindet oder ob relevante Abweichungen vorliegen. Vorzugsweise ermöglicht dies eine objektive und standardisierte Bewertung des Objektstatus, die darauf basiert, ob die festgelegten Kriterien eingehalten wurden oder ob Maßnahmen aufgrund der Abweichungen erforderlich sind.

In einem weiteren Aspekt wird vorgeschlagen, dass das Bestimmen des Schadens des Objektes und/oder das Ermitteln des Status des Objektes auf Basis des Abgleichs ein Erzeugen eines Schadensberichts und/oder eines Statusberichts und ein Einleiten einer darauf basierenden Aktion aufweist.

Das Bestimmen des Schadens des Objektes und/oder das Ermitteln des Status des Objektes umfasst vorzugsweise die Erstellung eines detaillierten Berichts, der entweder als Schadensbericht oder Statusbericht ausgeführt wird. Der Bericht umfasst vorzugsweise relevante Informationen zu den festgestellten Schäden und/oder zum allgemeinen Zustand des Objektes, einschließlich einer Beschreibung der Abweichungen, ihrer Schwere und/oder ihres genauen Ortes. Auf Basis dieses Berichts wird vorzugsweise eine automatisierte Aktion eingeleitet, die sich an den Ergebnissen des Abgleichs orientiert. Zur Erstellung des Berichtes weist das maschinelle Lernmodell vorzugsweise eine Sprachmodell-Komponente auf, die beispielsweise als Expertenmodell (wie Deepseek) oder als Transformer-Modell (wie GPT) ausgebildet sein kann.

Ein Beispiel für eine solche Aktion ist, dass bei der Feststellung eines Schadens die zuständige Versicherung automatisch benachrichtigt wird, wobei der Schadensbericht als Grundlage für die Schadensregulierung dient. Vorzugsweise kann das Verfahren bei einer Mietobjektrückgabe entscheiden, ob eine Kautionszahlung zumindest teilweise einbehalten wird, wenn der festgestellte Schaden über die übliche Abnutzung hinausgeht. Sollte kein Schaden erkannt werden oder lediglich ein Grenzkriterium, wie eine gebrauchstypische Abnutzung, festgestellt werden, wird die Kaution vorzugsweise vollständig zurückerstattet (Aktion). Vorzugsweise können bei der Identifikation eines Schadens auch automatische Schadensbehebungsmaßnahmen eingeleitet werden, wie die Beauftragung einer Reparatur durch einen passenden Handwerker oder die Kontaktaufnahme mit einem Hausmeisterdienst (Aktion), um den Schaden zeitnah zu beheben.

Die gesamte Prozesskette kann vorzugsweise durch ein Agenten-Modell-Konglomerat abgebildet werden, bei dem einzelne Agenten-Modelle als spezialisierte Softwaremodule ausgebildet sind. Vorzugsweise übernimmt jedes Agenten-Modell eine spezifische Aufgabe innerhalb des Verfahrens, wie beispielsweise die Erfassung und Vorverarbeitung der Daten, die Konsistenzprüfung, den Vergleich der Videodaten, die Schadensklassifikation, die Berichtserstellung und/oder die Einleitung darauf basierender Maßnahmen. Diese Agenten-Modelle arbeiten vorzugsweise autonom und gleichzeitig koordiniert miteinander, um den gesamten Prozess effizient und nahtlos zu gestalten. Vorzugsweise ermöglichen sie eine modulare und skalierbare Architektur, bei der einzelne Softwaremodule je nach Anforderung angepasst und/oder erweitert werden können. Durch die Integration von Feedback-Mechanismen zwischen den Agenten-Modelle wird die Qualität der Ergebnisse vorzugsweise laufend verbessert, was eine optimale Abbildung des gesamten Ver-fahrens gewährleistet.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt ein schematisches Flussdiagramm eines Ausführungsbeispiels des vorliegenden Verfahrens.
- Fig. 2: zeigt eine schematische Vorrichtung eines Ausführungsbeispiels des vorliegenden Verfahrens.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

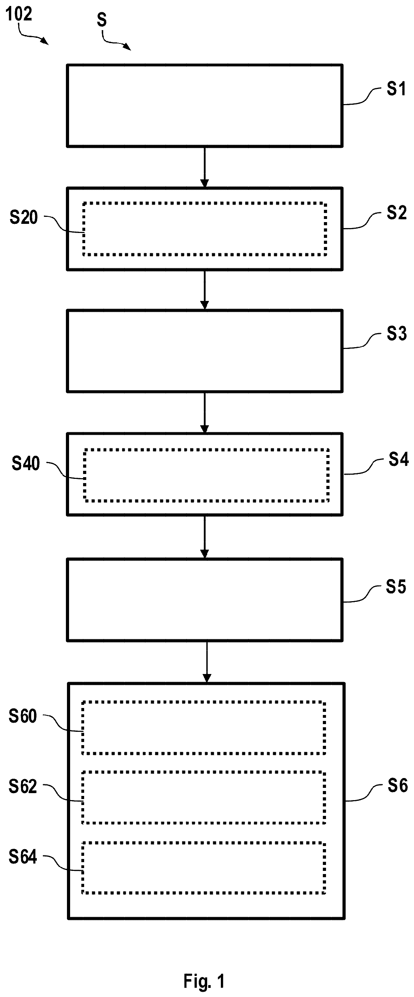

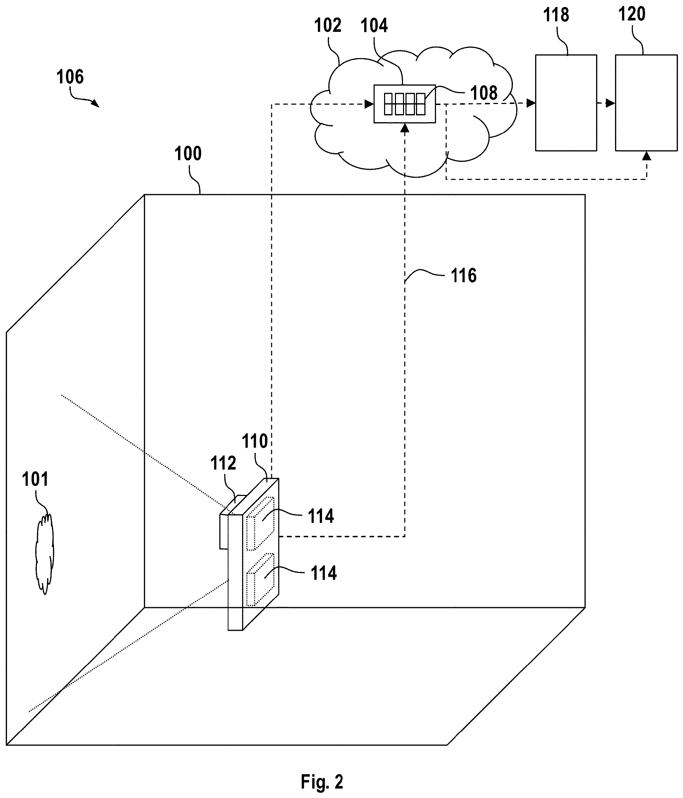

Fig. 1 zeigt ein schematisches Flussdiagramm eines Verfahrens S zur automatischen Bestimmung eines Schadens eines Objektes 100 und/oder zur Ermittlung eines Status des Objektes 100. Das Objekt 100 kann beispielsweise eine Wohnung oder ein Wohnhaus sein. Der Schaden kann etwa ein Wandschaden 101, wie ein Loch oder ein Fleck, sein, wie dies in Fig. 2 beispielhaft angedeutet ist.

Das Verfahren S kann in einer beliebigen Ausführungsform zumindest teilweise durch eine Vorrichtung 102 ausgeführt werden. Die Vorrichtung 102 weist zur Ausführung des Verfahrens S vorzugsweise eine Recheneinrichtung 104 auf. Die Vorrichtung 102 kann beispielsweise eine nicht näher gezeigte Bereitstellungseinrichtung und/oder eine Speichereinrichtung und/oder eine Ausgabeeinrichtung und/oder eine Anzeigeeinrichtung und/oder eine Eingabeeinrichtung und/oder mindestens eine Recheneinrichtung umfassen. Es versteht sich, dass die Recheneinrichtung gemeinsam mit einer der zuvor genannten weiteren Einrichtungen ausgebildet oder von dieser getrennt sein kann. Ferner kann die Vorrichtung 102 ein Teil eines Systems 106. Die Recheneinrichtung 104 kann vorzugsweise in einem Cloudservice oder einem Serverservice implementiert sein.

Das computerimplementierte Verfahren S umfasst mindestens die folgenden Schritte:
In einem Schritt S1 erfolgt ein Bereitstellen von Bezugs-Videodaten des Objektes 100 als eine Vergleichsbasis für ein maschinelles Lernmodell 108.

In einem Schritt S2 erfolgt ein Erfassen von Echtzeit-Videodaten des Objektes 100 durch eine Kameraeinrichtung 110. Zum Überwachen einer, insbesondere vollständigen, Erfassung des Objektes 100 kann das Verfahren S als optionalen Schritt ferner ein Abgleichen S20 der Echtzeit-Videodaten mit Raumdaten, insbesondere mit Grundrissdaten, der Wohnung oder des Wohnhauses aufweist.

In einem Schritt S3 erfolgt ein Erfassen von Beschleunigungssensordaten und/oder Inter-tialsensordaten der Kameraeinrichtung 110. Die Kameraeinrichtung 110 umfasst beispielsweise ein mobiles Endgerät (wie in Fig. 2 gezeigt) oder eine Augmented-Reality-Datenbrille. Ferner umfasst die Kameraeinrichtung 110 eine Kamera 112 und einen Beschleunigungssensor und/oder einen Intertialsensor 114.

In einem Schritt S4 erfolgt ein Überprüfen von Informationen der Echtzeit-Videodaten mit den Beschleunigungssensordaten und/oder den Intertialsensordaten auf Konsistenz. Die Informationen der Echtzeit-Videodaten weisen optische Flussinformationen auf. Die Konsistenzprüfung umfasst dann vorzugsweise ein Abgleichen S40 der optischen Flussinformationen mit den Beschleunigungssensordaten und/oder den Intertialsensordaten in einem Vektorraum.

In einem Schritt S5 erfolgt ein Abgleichen der Echtzeit-Videodaten mit den Bezugs-Videodaten durch das maschinelle Lernmodell 108 in Abhängigkeit der Konsistenzprüfung.

In einem Schritt S6 erfolgt ein Bestimmen des Schadens des Objektes 100 und/oder Ermitteln des Status des Objektes 100 auf Basis des Abgleichs. Das Bestimmen S6 des Schadens des Objektes 100 kann ein Klassifizieren und/oder Kategorisieren S60 des Schadens des Objektes 100 auf Basis des Vergleichs aufweisen, wobei dem maschinellen Lernmodell 108 vorzugsweise schadensspezifische Informationen 116 als zusätzliche Eingangsdaten bereitgestellt werden. Dies können beispielsweise Text- und/oder Sprachinformationen sein, die über das mobile Endgerät durch einen Nutzer eingegeben werden. Das Ermitteln S6 des Status des Objektes 100 kann auch ein Erzeugen S62 eines Vergleichsergebnisses aufweisen, das angibt, ob das Objekt 100 ein Grenzkriterium erfüllt oder von diesem abweicht.

Ferner kann der Schritt S6 ein Erzeugen S64 eines Schadensberichts und/oder eines Statusberichts 118 und ein Einleiten einer darauf basierenden Aktion 120 aufweisen.

Die Schritte des Verfahren S sind vorzugsweise als Computerprogrammprodukt abgebildet, umfassend Befehle, die bei der Ausführung des Programms durch einen Computer diesen veranlassen, die Schritte des Verfahrens auszuführen. Das Computerprogrammprodukt kann auf einem computerlesbaren Datenträger gespeichert und dadurch abrufbar sein.

### Bezugszeichenliste

- 100: Objekt
- 101: Wandschaden
- 102: Vorrichtung
- 104: Recheneinrichtung
- 106: System
- 108: maschinelles Lernmodell
- 110: Kameraeinrichtung
- 112: Kamera
- 114: Beschleunigungssensor und/oder Intertialsensor
- 116: schadensspezifische Informationen
- 118: Schadensbericht und/oder Statusbericht
- 120: Aktion

- S: Verfahren
- S1: Verfahrensschritt
- S2: Verfahrensschritt
- S20: Verfahrensschritt
- S3: Verfahrensschritt
- S4: Verfahrensschritt
- S40: Verfahrensschritt
- S5: Verfahrensschritt
- S6: Verfahrensschritt
- S60: Verfahrensschritt
- S62: Verfahrensschritt
- S64: Verfahrensschritt

## Patentansprüche

1. Verfahren (S) zur automatischen Bestimmung eines Schadens (101) eines Objektes (100) und/oder zur Ermittlung eines Status des Objektes (100), umfassend die Schritte:
- Bereitstellen (S1) von Bezugs-Videodaten des Objektes (100) als eine Vergleichsbasis für ein maschinelles Lernmodell (108);
- Erfassen (S2) von Echtzeit-Videodaten des Objektes (100) durch eine Kameraeinrichtung (110);
- Erfassen (S3) von Beschleunigungssensordaten und/oder Intertialsensordaten der Kameraeinrichtung (110);
- Überprüfen (S4) von Informationen der Echtzeit-Videodaten unter Verwendung der Beschleunigungssensordaten und/oder den Intertialsensordaten auf Konsistenz;
- in Abhängigkeit der Konsistenzprüfung, Abgleichen (S5) der Echtzeit-Videodaten mit den Bezugs-Videodaten durch das maschinelle Lernmodell (108); und
- Bestimmen (S6) des Schadens (101) des Objektes (100) und/oder Ermitteln des Status des Objektes (100) auf Basis des Abgleichs.

2. Verfahren nach Anspruch 1, wobei die Informationen der Echtzeit-Videodaten optische Flussinformationen aufweisen, und wobei die Konsistenzprüfung ein Abgleichen (S40) der optischen Flussinformationen mit den Beschleunigungssensordaten und/oder den Intertialsensordaten in einem Vektorraum aufweist.

3. Verfahren nach Anspruch 1 oder 2, wobei das Objekt (100) eine Wohnung oder ein Wohnhaus aufweist, wobei das Erfassen (S2) der Echtzeit-Videodaten des Objektes (100) durch eine Kameraeinrichtung (110) zum Überwachen einer, insbesondere vollständigen, Erfassung des Objektes (100) ein Abgleichen (S20) der Echtzeit-Videodaten mit Raumdaten, insbesondere mit Grundrissdaten, der Wohnung oder des Wohnhauses aufweist.

4. Verfahren nach einem der vorstehenden Ansprüche, wobei die Kameraeinrichtung (110) ein mobiles Endgerät oder eine Augmented-Reality-Datenbrille aufweist, und wobei die Kameraeinrichtung (110) eine Kamera (112) und einen Beschleunigungssensor und/oder einen Intertialsensor (114) aufweist.

5. Verfahren nach einem der vorstehenden Ansprüche, wobei das Bestimmen (S6) des Schadens (101) des Objektes (100) ein Klassifizieren und/oder Kategorisieren (S60) des Schadens (101) des Objektes (100) auf Basis des Vergleichs aufweist, wobei dem maschinellen Lernmodell (108) vorzugsweise schadensspezifische Informationen (116) als zusätzliche Eingangsdaten bereitgestellt werden.

6. Verfahren nach einem der vorstehenden Ansprüche, wobei das Ermitteln (S6) des Status des Objektes (100) ein Erzeugen (S62) eines Vergleichsergebnisses aufweist, das angibt, ob das Objekt (100) ein Grenzkriterium erfüllt, oder von diesem abweicht.

7. Verfahren nach einem der vorstehenden Ansprüche, wobei das Bestimmen (S6) des Schadens (101) des Objektes (100) und/oder das Ermitteln (S6) des Status des Objektes (100) auf Basis des Abgleichs ein Erzeugen (S64) eines Schadensberichts und/oder eines Statusberichts (118) und ein Einleiten einer darauf basierenden Aktion (120) aufweist.

8. Computerprogrammprodukt, umfassend Befehle, die bei der Ausführung des Programms durch einen Computer diesen veranlassen, die Schritte des Verfahrens nach einem der Ansprüche 1 bis 7 auszuführen.

9. Computerlesbarer Datenträger, auf dem das Computerprogrammprodukt nach Anspruch 8 gespeichert ist.

10. Vorrichtung (100) zur automatischen Bestimmung eines Schadens (101) eines Objektes (100) und/oder zur Ermittlung eines Status des Objektes (100), wobei die Vorrichtung (100) eine Recheneinrichtung (104) aufweist, die dazu ausgebildet ist, die folgenden Schritte auszuführen:
- Bereitstellen von Bezugs-Videodaten des Objektes (100) als eine Vergleichsbasis für ein maschinelles Lernmodell (108);
- Erfassen von Echtzeit-Videodaten des Objektes (100) durch eine Kameraeinrichtung (110);
- Erfassen von Beschleunigungssensordaten und/oder Intertialsensordaten der Kameraeinrichtung (100);
- Überprüfen von Informationen der Echtzeit-Videodaten unter Verwendung der Beschleunigungssensordaten und/oder den Intertialsensordaten auf Konsistenz;
- in Abhängigkeit der Konsistenzprüfung, Abgleichen der Echtzeit-Videodaten mit den Bezugs-Videodaten durch das maschinelle Lernmodell (108); und
- Bestimmen des Schadens (101) des Objektes (100) und/oder Ermitteln des Status des Objektes (100) auf Basis des Abgleichs.

## Geänderte Patentansprüche

### Geänderte Patentansprüche gemäss Regel 137(2) EPÜ.

1. Verfahren (S) zur automatischen Bestimmung eines Schadens (101) eines Objektes (100) und/oder zur Ermittlung eines Status des Objektes (100), umfassend die Schritte:
- Bereitstellen (S1) von Bezugs-Videodaten des Objektes (100) als eine Vergleichsbasis für ein maschinelles Lernmodell (108);
- Erfassen (S2) von Echtzeit-Videodaten des Objektes (100) durch eine Kameraeinrichtung (110);
- Erfassen (S3) von Beschleunigungssensordaten und/oder Intertialsensordaten der Kameraeinrichtung (110);
- Überprüfen (S4) von Informationen der Echtzeit-Videodaten unter Verwendung der Beschleunigungssensordaten und/oder der Intertialsensordaten auf Konsistenz, wobei die Informationen der Echtzeit-Videodaten optische Flussinformationen aufweisen, welche Bewegungen von Bildpunkten oder Bildbereichen zwischen aufeinanderfolgenden Frames der Echtzeit-Videodaten repräsentieren, und wobei die Konsistenzprüfung ein Abgleichen (S40) der optischen Flussinformationen mit den Beschleunigungssensordaten und/oder den Intertialsensordaten in einem Vektorraum aufweist, um zu prüfen, ob die Bewegungen von Bildpunkten oder Bildbereichen mit durch die Beschleunigungssensordaten und/oder die Inertialsensordaten erfassten Bewegungen der Kameraeinrichtung (110) übereinstimmen;
- in Abhängigkeit von der Konsistenzprüfung, Abgleichen (S5) der Echtzeit-Videodaten mit den Bezugs-Videodaten durch das maschinelle Lernmodell (108); und
- Bestimmen (S6) des Schadens (101) des Objektes (100) und/oder Ermitteln des Status des Objektes (100) auf Basis des Abgleichs.

2. Verfahren nach Anspruch 1, wobei das Objekt (100) eine Wohnung oder ein Wohnhaus aufweist, wobei das Erfassen (S2) der Echtzeit-Videodaten des Objektes (100) durch eine Kameraeinrichtung (110) zum Überwachen einer, insbesondere vollständigen, Erfassung des Objektes (100) ein Abgleichen (S20) der Echtzeit-Videodaten mit Raumdaten, insbesondere mit Grundrissdaten, der Wohnung oder des Wohnhauses aufweist.

3. Verfahren nach Anspruch 1 oder 2, wobei die Kameraeinrichtung (110) ein mobiles Endgerät oder eine Augmented-Reality-Datenbrille aufweist, und wobei die Kameraeinrichtung (110) eine Kamera (112) und einen Beschleunigungssensor und/oder einen Intertialsensor (114) aufweist.

4. Verfahren nach einem der vorstehenden Ansprüche, wobei das Bestimmen (S6) des Schadens (101) des Objektes (100) ein Klassifizieren und/oder Kategorisieren (S60) des Schadens (101) des Objektes (100) auf Basis des Vergleichs aufweist, wobei dem maschinellen Lernmodell (108) vorzugsweise schadensspezifische Informationen (116) als zusätzliche Eingangsdaten bereitgestellt werden.

5. Verfahren nach einem der vorstehenden Ansprüche, wobei das Ermitteln (S6) des Status des Objektes (100) ein Erzeugen (S62) eines Vergleichsergebnisses aufweist, das angibt, ob das Objekt (100) ein Grenzkriterium erfüllt, oder von diesem abweicht.

6. Verfahren nach einem der vorstehenden Ansprüche, wobei das Bestimmen (S6) des Schadens (101) des Objektes (100) und/oder das Ermitteln (S6) des Status des Objektes (100) auf Basis des Abgleichs ein Erzeugen (S64) eines Schadensberichts und/oder eines Statusberichts (118) und ein Einleiten einer darauf basierenden Aktion (120) aufweist.

7. Computerprogrammprodukt, umfassend Befehle, die bei der Ausführung des Programms durch einen Computer diesen veranlassen, die Schritte des Verfahrens nach einem der Ansprüche 1 bis 6 auszuführen.

8. Computerlesbarer Datenträger, auf dem das Computerprogrammprodukt nach Anspruch 7 gespeichert ist.

9. Vorrichtung (100) zur automatischen Bestimmung eines Schadens (101) eines Objektes (100) und/oder zur Ermittlung eines Status des Objektes (100), wobei die Vorrichtung (100) eine Recheneinrichtung (104) aufweist, die dazu ausgebildet ist, die folgenden Schritte auszuführen:
- Bereitstellen von Bezugs-Videodaten des Objektes (100) als eine Vergleichsbasis für ein maschinelles Lernmodell (108);
- Erfassen von Echtzeit-Videodaten des Objektes (100) durch eine Kameraeinrichtung (110);
- Erfassen von Beschleunigungssensordaten und/oder Intertialsensordaten der Kameraeinrichtung (100);
- Überprüfen von Informationen der Echtzeit-Videodaten unter Verwendung der Beschleunigungssensordaten und/oder den Intertialsensordaten auf Konsistenz, wobei die Informationen der Echtzeit-Videodaten optische Flussinformationen aufweisen, welche Bewegungen von Bildpunkten oder Bildbereichen zwischen aufeinanderfolgenden Frames der Echtzeit-Videodaten repräsentieren, und wobei die Konsistenzprüfung ein Abgleichen (S40) der optischen Flussinformationen mit den Beschleunigungssensordaten und/oder den Intertialsensordaten in einem Vektorraum aufweist, um zu prüfen, ob die Bewegungen von Bildpunkten oder Bildbereichen mit durch die Beschleunigungssensordaten und/oder die Inertialsensordaten erfassten Bewegungen der Kameraeinrichtung (110) übereinstimmen;
- in Abhängigkeit von der Konsistenzprüfung, Abgleichen der Echtzeit-Videodaten mit den Bezugs-Videodaten durch das maschinelle Lernmodell (108); und
- Bestimmen des Schadens (101) des Objektes (100) und/oder Ermitteln des Status des Objektes (100) auf Basis des Abgleichs.
